# EUROPEAN PATENT SPECIFICATION

(11) **EP 0 399 401 B1**
(45) Date of publication and mention of the grant of the patent: **13.04.1994**
(21) Application number: 90109459.9
(22) Date of filing: 18.05.1990
(51) Int. Cl.: B60R 1/06

(54) **Support for the external rearview mirror of a motor vehicle, particularly a bus**
Halterung für einen Aussenrückspiegel eines Kraftfahrzeuges, insbesondere eines Omnibusses
Support de rétroviseur extérieur d'un véhicule à moteur, en particulier un bus

(30) Priority: 20.05.1989 DE 8906260 U
(43) Date of publication of application: 28.11.1990
(73) Proprietor: Iveco Magirus Aktiengesellschaft, D-89017 Ulm (DE)
(72) Inventor: Pfeifle,Roland, D-7916 Nersingen (DE); Lehr,Alfred, D-7913 Senden (DE)
(74) Representative: Jorio, Paolo

(56) References cited:
- EP-A- 0 092 665
- EP-A- 0 226 747
- DE-A- 2 239 853
- US-A- 3 306 565

## Description

The present invention relates to a support for the external rearview mirror of a motor vehicle, particularly a bus, featuring a substantially U-shaped bracket supporting the mirror and which, at both ends, comprises aligned, spaced pins mounted for rotation and sliding axially inside supports secured to the vehicle body in a substantially vertical plane.

Known supports for the external rearview mirrors of motor vehicles present substantially two designs.

The first provides for one-point assembly inside a single fixed support on the vehicle body, inside which the mirror or assembly bracket is inserted inside a dovetail guide enabling upward removal of the mirror and mirror support. This type of design is preferably employed on buses or vans for enabling removal of the mirror when the vehicle is fed through a wash facility. A major drawback of removable supports of the aforementioned type is that, being secured to only one point on the vehicle body, they fail to provide for a stable, vibrationfree image, particularly when driving over rough road surfaces. This is further accentuated by the relatively heavy weight of the modern external rearview mirrors, which invariably feature extensive reflecting surfaces, powered regulating systems, heating systems, wipers, etc.

The second design provides for assembly at two points on the vehicle body, and is preferably employed on trucks. Though providing for a relatively stable image, the mirror, even when secured in rotary manner to the vehicle body with a pin in form of a close heavy keying fit preloaded elastically on the corresponding support (see DE-A-3 544 836 corresponding to the preamble of claim 1), is cumbersome and easily damaged when the vehicle is fed through a wash facility. Moreover, being inaccessible, the vehicle panel portion concealed by the mirror must be washed by hand.

The aim of the present invention is to provide a support for an external rearview mirror of the aforementioned type, which, in addition to providing a relatively stable image by virtue of being secured to two points on the vehicle, can be manipulated easily, mainly on account of its straightforward design, and in no way obstructs passage of the vehicle through a wash facility.

The problem underlying the present invention is solved by a support for the external rearview mirror as defined in the characterising portion of Claim 1.

Further advantages of the present invention are achieved via the means indicated in subclaims 2 to 17.

The principal aim of the present invention is therefore to provide an external rearview mirror support of straightforward design, secured to two points on the vehicle body, and fully removable from the vehicle when this is fed through a wash facility, thus safeguarding large, heavy mirrors against damage during the wash process while at the same time preventing the same from damaging the vehicle body. Two-point assembly of the mirror support to the vehicle body is effected in such a manner that the known, easily removable dovetail fastener is mounted on one side, preferably the bottom side, of the support or substantially U-shaped bracket, whereas the other side comprises an easily accessible bearing which in no way impairs performance of the dovetail bearing. The mirror support or U-shaped bracket also acts as a bearing shaft, and coincides axially with the axis of rotation of the opposite (dovetail) bearing. Smooth slide is assured in particular by a plastic bearing shell having the required clearance.

The advantage of a mirror that can be removed during passage of the vehicle through a wash facility (a frequent occurrence, at least in the case of buses), is thus achieved without impairing the stability of the reflected image and therefore also the driving safety of the vehicle.

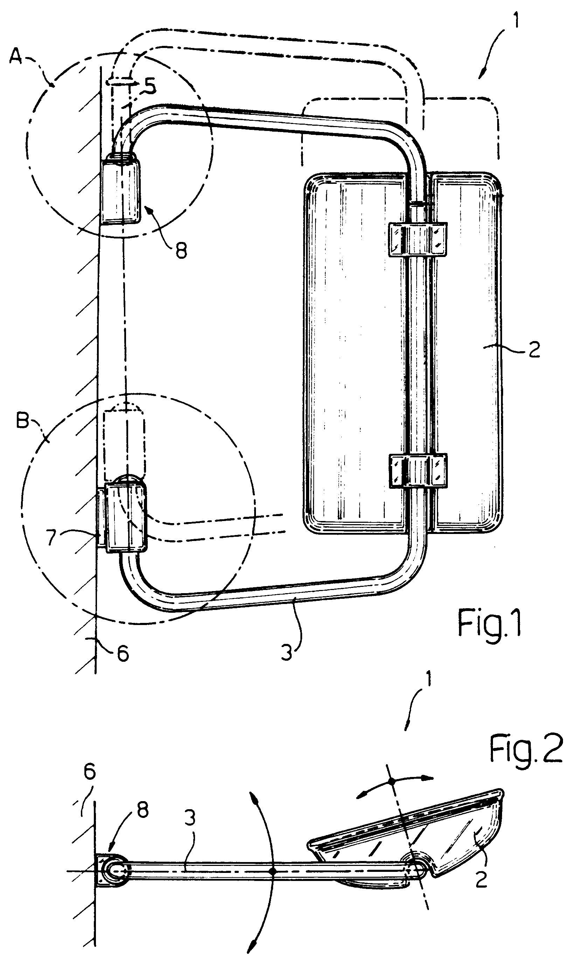

Different embodiments of the present invention will be described by way of examples with reference to the accompanying drawings, in which:
Fig.s 1 and 2 show side and top plan views of the rearview mirror support as assembled to the vehicle body;
Fig.s 3 to 5 show side, front and top plan views of detail B in Fig.1, the U-shaped bracket and relative pins being omitted in Fig.s 4 and 5;
Fig.s 6 and 7 show side and top plan views of detail A in Fig.1, the U-shaped bracket being omitted in Fig.7;

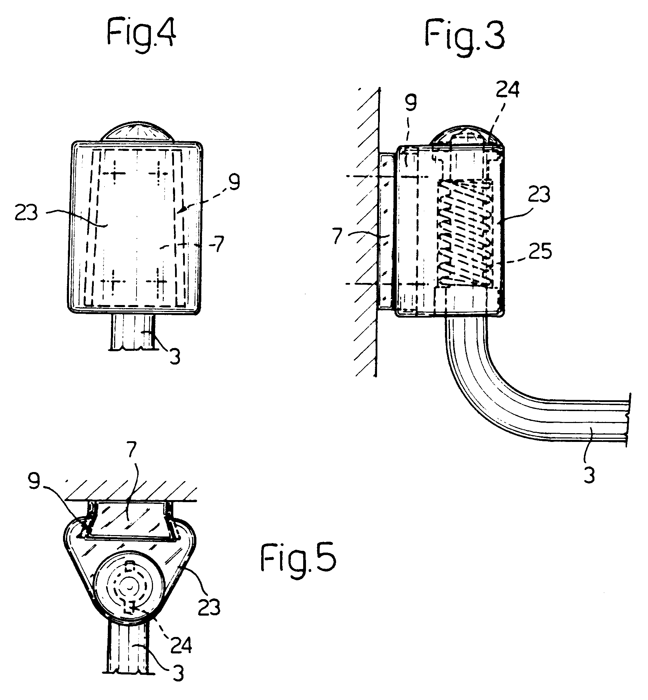

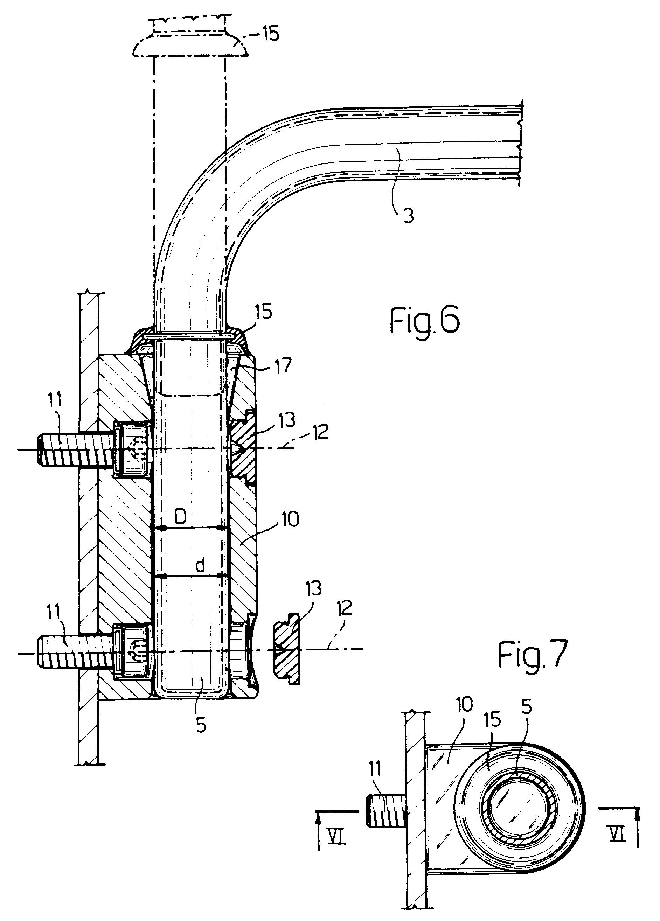

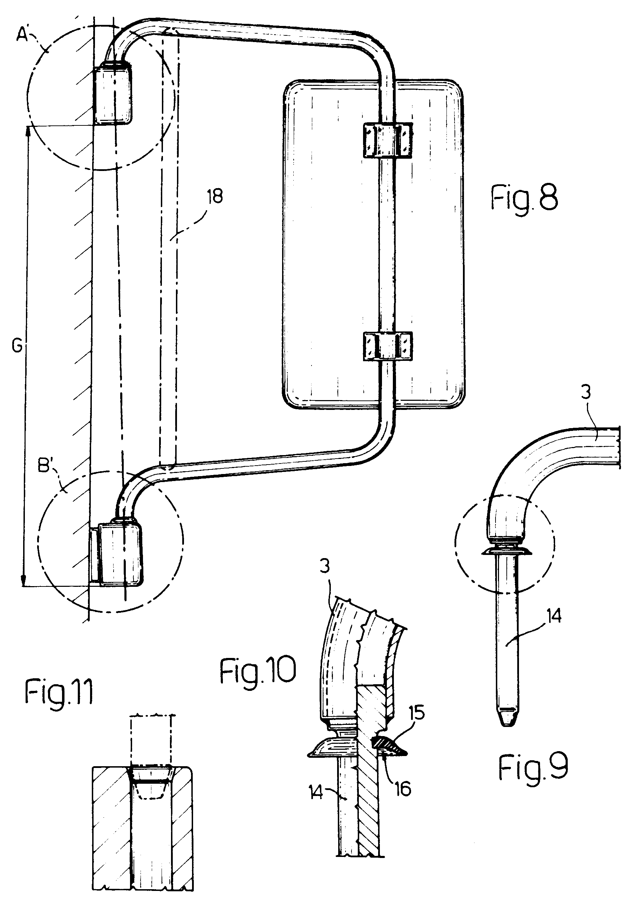

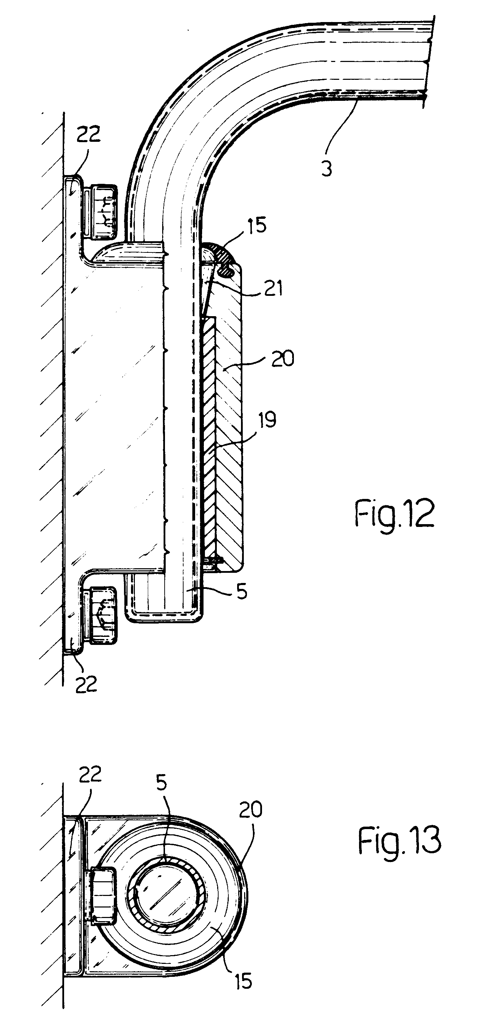

Fig.8 shows a schematic side view of a further embodiment of the support similar to that in Fig.4;
Fig.s 9 to 11 show three different detailed illustrations of detail A in Fig.1 and detal A′ in Fig.8;
Fig.s 12 and 13 show side and top plan views of a further embodiment of detail A in Fig.1 and detail A′ in Fig.8, the U-shaped bracket and relative pins being omitted in Fig.13.

Fig.s 1 and 2 show schematic views of the bodywork 6 of a bus, the outer side panels of which are fitted with a support 1 for an external rearview mirror 2. Said support 1 comprises a load-bearing tube in the form of a U-shaped bracket 3, to the central vertical point of which mirror 2 is secured so as to rotate in relation to bracket 3. Bracket 3 comprises two ends or pins 4 and 5 aligned facing each other and a given distance apart. Said pins 4 and 5 are so designed as to slide axially and rotate inside a fixed bottom support 7 and a fixed top support 8 on the vehicle body, and so enable bracket 3 of mirror 2 to assume various positions, e.g. for swinging the entire support 1 against the vehicle body panel, or sliding the entire bracket 3, including mirror 2, axially upwards, so as to detach pins 4 and 5 of bracket 3 from respective fixed supports 7 and 8, and so detach support 1 of mirror 2 from body 6. The detached position of bracket 3 is shown by the dotted line in Fig.1. In like manner, mirror 2 may be removed for feeding the vehicle through a wash facility, while at the same time providing for a stable reflected image during operation of the vehicle.

Support 1 is also designed for two-point assembly to vehicle body 6. The mirror bearing consists substantially of two parts: a first part consisting of bottom support 7 and top support 8 and secured to vehicle body 6; and a second part constituting a single unit with the mirror support or bracket 3. The bottom mounting point of bracket 3 is a known close heavy keying fit of mirror support 1 to the vehicle body, with the possibility of adjustment to various positions, as illustrated by detail B in Fig.1 and in more detail in Fig.s 3, 4 and 5. In particular, provision is made for a two-plane upward-tapering wedge design (dovetail guide 9) enabling upward removal of housing 23 of bottom pin 4 of bracket 3 in relation to fixed bottom support 7, while at the same time providing downwards for a close heavy keying fit of the individual components. Inside pin housing 23, provision is made for a reticle 24 and a preloaded compression spring 25, for adjusting the work position of bracket 3 in relation to pin housing 23.

On a normal removal mounting, the mirror and bracket would be connected to the vehicle body solely as described above, thus resulting, during operation of the vehicle, in an unstable, distorted image due to the weight of the mirror assembly and resulting lever ratios. According to the present invention, however, the known mirror support described above is provided with an additional top bearing A on vehicle body 6, for preventing movement of the free lever arm of bracket 3 to which the mirror is secured, and so providing for a more stable image. For this to be achieved, bearing A must be readily accessible and prevented from interfering vertically or horizontally with bearing B, which must also sustain the main load on vehicle body 6. As shown in detail in Fig.s 6 and 7, top bearing A substantially consists of an all-plastic bearing shell 10 secured to vehicle body 6 by means of at least one screw 11. To facilitate assembly and achieve a compact shell 10, provision is preferably made for a through hole 12 closed by means of a plug 13.

Top end or pin 5 of bracket 3, which is usually a steel tube, is so formed as to act as a bearing shaft and to coincide axially with the axis of rotation of bottom bearing B.

To ensure smooth slide of bracket 3 and bearing shell 10, depending on the material selected for these parts, a clearance of approximately 0.1 to 1 mm must be established between D and d.

Top pin 5 is designed to receive a sealing ring 15 for sealing the top edge of bearing shell 10.

For enabling a rough fit or troublefree insertion of the mirror, the top of shell 10 presents a first conical enlargement 17. On bottom bearing B (Fig.3), on the other hand, no conical enlargement is provided, thus enabling bottom pin 4 to be inserted and guided accurately.

In the Fig.8 embodiment, bottom bearing B′ faces downwards, so that bracket 3 of mirror support 1 is bent downwards in the same way as top bearing A′, thus increasing the distance G between the two mounting points in relation to the Fig.1 embodiment. In the vicinity of top and bottom pins 5 and 4, the Fig.8 embodiment also comprises a substantially vertical cross brace 18 for maintaining a constant distance between pins 4 and 5.

An alternative for the shaft of bearing A is represented by rotary member 14, which is indispensible when, for reasons of design, distortion or surface finish, bracket 3 cannot be employed as a bearing shaft. Said rotary member 14 presents a groove 16 for receiving a sealing ring 15.

Fig.s 12 and 13 show more detailed views of top bearing A′ in Fig.8. Top pin 5 of bracket 3 fits inside a plastic bearing shell 19 in turn fitted inside a metal bearing shell 20. Said metal shell 20 comprises, at the top, a second conical enlargement 21 for enabling easy insertion of top pin 5, and is secured to vehicle body 6 by means of two external fasteners 22. In this embodiment, sealing ring 15 is fitted to the top edge of bearing shell 20.

## Claims

1. A support (1) for the external rearview mirror (2) of a motor vehicle, particularly a bus, featuring a substantially U-shaped bracket (3) supporting said mirror (2) and comprising, at both ends, two aligned spaced pins (4, 5) designed to slide axially and rotate inside corresponding supports (7, 8) secured to the vehicle body (6) in a substantially vertical plane, one (4) of said pins (4, 5) being in form of a close heavy keying fit preloaded elastically on the corresponding one (7) of said supports (7, 8), characterised by the fact that said one support (7) is axially adjustable in relation to said vehicle body (6) via a dovetail guide (9), and the other one (5) of said pins (4, 5) is fitted loosely on the other one (8) of said supports (7, 8), so as to rotate and slide slightly upwards, inside a bearing shell (10, 19) on said other support (8).

2. A support according to Claim 1, characterised by the fact that said one pin (4) is the bottom pin of said bracket (3), whereas said other pin (5) is the top pin of said bracket (3).

3. A support according to Claim 1 or 2, characterised by the fact that said bearing shell (10) is formed entirely from plastic (Fig.s 6 and 7).

4. A support according to Claim 3, characterised by the fact that said bearing shell (10) is securable to said vehicle body (6) by means of at least one screw (11).

5. A support as claimed in claim 4, characterised by the fact that said screw (11) fits inside a through hole (12) on said bearing shell (10), and that said through hole (12) is closed by a plug (13).

6. A support as claimed in one of the foregoing Claims from 1 to 5, characterised by the fact that the other said pin (5) is formed in one piece with said U-shaped bracket (3).

7. A support as claimed in Claim 6, characterised by the fact that the other said pin (5) comprises a rotary member (14) inserted inside said U-shaped bracket (3) (Fig.s 9-11).

8. A support as claimed in one of the foregoing Claims from 2 to 7, characterised by the fact that the other said pin (5) is sealed in relation to said bearing shell (10) by means of a top sealing ring (15).

9. A support as claimed in Claim 8, characterised by the fact that said rotary member (14) comprises a groove (16) for receiving said sealing ring (15).

10. A support as claimed in one of the foregoing Claims from 2 to 9, characterised by the fact that said bearing shell (10) comprises a first upper conical enlargement (17).

11. A support as claimed in one of the foregoing Claims from 1 to 10, characterised by the fact that both said pins (4, 5) of said U-shaped bracket (3) face downwards in the same direction (Fig.8).

12. A support as claimed in one of the foregoing Claims from 1 to 11, characterise dby the fact that, in the vicinity of both said pins (4, 5), said U-shaped bracket comprises a substantially vertical cross brace (13).

13. A support as claimed in one of the foregoing Claims from 6 to 12, characterised by the fact that said bearing shell (19) in turn fits inside a bearing shell (20) securable to said vehicle body (6) (Fig.12).

14. A support as claimed in Claim 13, characterised by the fact that said bearing shell (19) is formed from plastic and said bearing shell (20) from metal.

15. A support as claimed in Claim 13 or 14, characterised by the fact that said bearing shell (20) comprises a second upper conical enlargement (21).

16. A support as claimed in one of the foregoing Claims from 13 to 15, characterised by the fact that said bearing shell (20) is securable to said vehicle body (6) by means of at least one external fastener (22).

17. A support as claimed in one of the foregoing Claims from 13 to 16, characterised by the fact that said sealing ring (15) is fitted on to the top side of said bearing shell (20) (Fig.12).

## Patentansprüche

1. Halterung (1) für einen Außenrückspiegel (2) eines Kraftfahrzeugs, insbesondere eines Busses, mit einem im wesentlichen U-förmigen Bügel (3), der den Spiegel (2) abstützt und an beiden Enden zwei ausgerichtete, in Abstand liegende Stifte (4,5) umfaßt, die axial innerhalb entsprechender Halter (7,8), die auf dem Fahrzeugaufbau (6) in einer im wesentlichen senkrechten Ebene befestigt sind, axial gleiten und drehbar sind, wobei einer (4) der Stifte (4,5) in Form eines engen, schweren Keilsitzes mit elastischer Vorspannung gegen den entsprechenden (7) der Halter (7,8) ausgebildet ist, **gekennzeichnet** durch die Tatsache, daß der eine Halter (7) axial in bezug auf den Fahrzeugaufbau (6) mit Hilfe einer Schwalbenschwanzführung (9) einstellbar ist, daß der andere (5) der Stifte (4,5) lose In den anderen (8) der Halter (7,8) eingefügt ist, so daß er drehbar und leicht aufwärts verschiebbar innerhalb einer Lagerhülse (10,19) an dem oberen Halter (8) ist.

2. Halterung nach Anspruch 1, **gekennzeichnet** durch die Tatsache, daß der eine Stift (4) der bodenseitige Stift des Bügels (3) ist, während der andere Stift (5) der obere Stift des Bügels (3) ist.

3. Halterung nach Anspruch 1 oder 2, **gekennzeichnet** durch die Tatsache, daß die Lagerhülse (10) vollständig aus Kunststoff ausgebildet ist (Fig. 6 und 7).

4. Halterung nach Anspruch 3, **gekennzeichnet** durch die Tatsache, daß die Lagerhülse (10) an dem Fahrzeugaufbau (6) mit Hilfe wenigstens einer Schraube (11) befestigbar ist.

5. Halterung nach Anspruch 4, **gekennzeichnet** durch die Tatsache, daß die Schraube (11) in das Innere einer Durchgangsbohrung (12) der Lagerhülse (10) eingreift und daß die Durchgangsbohrung (12) durch einen Stopfen (13) verschlossen ist.

6. Halterung nach einem der vorhergehenden Ansprüche 1 bis 5, **gekennzeichnet** durch die Tatsache, daß der andere Stift (5) in einem Stück mit dem U-förmigen Bügel (3) ausgebildet ist.

7. Halterung nach Anspruch 6, **gekennzeichnet** durch die Tatsache, daß der andere Stift (5) ein drehbares Glied (14) umfaßt, das in das Innere des U-förmigen Bügels (3) eingefügt ist (Fig. 9 bis 11).

8. Halterung nach einem der vorhergehenden Ansprüche 2 bis 7, **gekennzeichnet** durch die Tatsache, daß der andere Stift (5) in bezug auf die Lagerhülse (10) mit Hilfe eines oberen Dichtringes (15) abgedichtet ist.

9. Halterung nach Anspruch 8, **gekennzeichnet** durch die Tatsache, daß das drehbare Glied (14) eine Nut (16) zur Aufnahme eines Dichtringes (15) umfaßt.

10. Halterung nach einem der vorhergehenden Ansprüche 2 bis 9, **gekennzeichnet** durch die Tatsache, da die Lagerhülse (10) wenigstens eine obere konische Erweiterung (17) aufweist.

11. Halterung nach einem der vorhergehenden Ansprüche 1 bis 10, **gekennzeichnet** durch die Tatsache, daß beide Stifte (4,5) des U-förmigen Bügels (3) nach unten in die selbe Richtung gerichtet sind.

12. Halterung nach einem der vorhergehenden Ansprüche 1 bis 11, **gekennzeichnet** durch die Tatsache, daß in der Nähe der beiden Stifte (4,5) der U-förmige Bügel einen im wesentlichen senkrechten Querverbinder (13) umfaßt.

13. Halterung nach einem der vorhergehenden Ansprüche 6 bis 12, **gekennzeichnet** durch die Tatsache, daß die Lagerhülse (19) ihrerseits in das Innere einer Lagerhülse (20) eingreift, die an dem Fahrzeugaufbau (6) befestigbar ist (Fig. 12).

14. Halterung nach Anspruch 13, **gekennzeichnet** durch die Tatsache, daß die Lagerhülse (19) aus Kunststoff besteht und daß die Lagerhülse (20) aus Metall besteht.

15. Halterung nach Anspruch 13 oder 14, **gekennzeichnet** durch die Tatsache, daß die Lagerhülse (20) eine zweite obere konische Erweiterung (21) aufweist.

16. Halterung nach einem der vorhergehenden Ansprüche 13 bis 15, **gekennzeichnet** durch die Tatsache, daß die Lagerhülse (20) an dem Fahrzeugaufbau (6) mit Hilfe von wenigstens einer externen Befestigungseinrichtung (22) befestigbar ist.

17. Halterung nach einem der vorhergehenden Ansprüche 13 bis 16, **gekennzeichnet** durch die Tatsache, daß der Dichtring (15) in die Oberseite der Lagerhülse (20) eingefügt ist (Fig. 12).

## Revendications

1. Support (1) de rétroviseur extérieur (2) d'un véhicule à moteur tel qu'en particulier un bus, se caractérisant par un étrier (3) essentiellement en forme de U supportant le rétroviseur (2) et comprenant, à ses deux extrémités, deux tiges alignées espacées (4, 5) conçues pour glisser axialement et tourner à l'intérieur de supports correspondants (7, 8) fixés au corps de véhicule (6) dans un plan essentiellement vertical, l'une (4) de ces tiges (4, 5) se présentant sous la forme d'un emboîtement de verrouillage lourd et serré pré-chargé élastiquement sur l'un correspondant (7) de supports (7, 8), caractérisé en ce que le support (7) est réglable axialement par rapport au corps de véhicule (6) par l'intermédiaire d'un guide à queue d'aronde (9), et en ce que l'autre (5) des tiges (4, 5) s'adapte avec jeu sur l'autre (8) des supports (7, 8), de manière à tourner et glisser légèrement vers le haut, à l'intérieur d'une coquille de support (10, 19) montée sur l'autre support (8).

2. Support selon la revendication 1, caractérisé en ce que la première tige (4) est la tige inférieure de l'étrier (3), tandis que l'autre tige (5) est la tige supérieure de l'étrier (3).

3. Support selon l'une des revendications 1 ou 2, caractérisé en ce que la coquille de support (10) est réalisée entièrement en matière plastique (figures 6 et 7).

4. Support selon la revendication 3, caractérisé en ce que la coquille de support (10) peut être fixée au corps de véhicule (6) au moyen d'au moins une vis (11).

5. Support selon la revendication 4, caractérisé en ce que la vis (11) s'adapte à l'intérieur d'un trou de passage (12) de la coquille de support (10), et en ce que ce trou de passage (12) est fermé par un bouchon (13).

6. Support selon l'une quelconque des revendications 1 à 5 précédentes, caractérisé en ce que l'autre tige (5) est formée d'une seule pièce avec l'étrier (3) en forme de U.

7. Support selon la revendication 6, caractérisé en ce que l'autre tige (5) comprend un élément rotatif (14) introduit à l'intérieur de l'étrier (3) en forme de U (figures 9 à 11).

8. Support selon l'une quelconque des revendications 2 à 7 précédentes, caractérisé en ce que l'autre tige (5) est scellée par rapport à la coquille de support (10) au moyen d'une bague d'étanchéité supérieure (15).

9. Support selon la revendication 8, caractérisé en ce que l'élément rotatif (14) comprend une rainure (16) destinée à recevoir la bague d'étanchéité (15).

10. Support selon l'une quelconque des revendications 2 à 9 précédentes, caractérisé en ce que la coquille de support (10) comprend un premier agrandissement conique supérieur (17).

11. Support selon l'une quelconque des revendications 1 à 10 précédentes, caractérisé en ce que les deux tiges (4, 5) de l'étrier 3, en forme de U sont tournées vers le bas dans la même direction (figure 8).

12. Support selon l'une quelconque des revendications 1 à 11 précédentes, caractérisé en ce que, au voisinage des deux tiges (4, 5), l'étrier en forme de U comprend une entretoise transversale essentiellement verticale (18).

13. Support selon l'une quelconque des revendications 6 à 12 précédentes, caractérisé en ce que la coquille de support (19) s'adapte à son tour à l'intérieur d'une coquille de support (20) pouvant être fixée au corps de véhicule (6) (figure 12).

14. Support selon la revendication 13, caractérisé en ce que la coquille de support (19) est réalisée en matière plastique, et en ce que la coquille de support (20) est réalisée en métal.

15. Support selon l'une des revendications 13 ou 14, caractérisé en ce que la coquille de support (20) comprend un second agrandissement conique supérieur (21).

16. Support selon l'une quelconque des revendications 13 à 15 précédentes, caractérisé en ce que la coquille de support (20) peut être fixée au corps de véhicule (6) au moyen d'au moins une fixation extérieure (22).

17. Support selon l'une quelconque des revendications 13 à 16 précédentes, caractérisé en ce que la bague d'étanchéité (15) s'adapte sur le côté supérieur de la coquille de support (20) (figure 12).
